# EUROPEAN PATENT SPECIFICATION

(11) **EP 1 080 628 B1**
(45) Date of publication and mention of the grant of the patent: **13.04.2005**
(21) Application number: 99202854.8
(22) Date of filing: 02.09.1999
(51) Int. Cl.: A01F 15/07

(54) **Storage apparatus for round baler wrapping materials**
Lagervorrichtung für Rundballenumhüllungsmaterialien
Appareil de stockage pour des matériaux d'enveloppement d'une presse à balles rondes

(43) Date of publication of application: 07.03.2001
(73) Proprietor: CNH Belgium N.V., 8210 Zedelgem (BE)
(72) Inventor: Underhill, Kenneth R., Strasburg, PA 17579 (US)
(74) Representative: Vandenbroucke, Alberic

(56) References cited:
- US-A- 4 677 807
- US-A- 4 956 968
- US-A- 5 433 059

## Description

The present invention relates generally to agricultural baling machines for producing cylindrical bales, commonly referred to as round bales, and more particularly apparatus for storing wrapping material that is used for wrapping a cylindrical package of crop material formed in a bale forming chamber.

Round balers generally have a bale forming chamber defined by a pair of opposing side walls associated with an array of side-by-side belts, transverse slats trained on chains, a plurality of transverse rolls or a combination of these various elements, e.g. rolls and belts. During field operation, windrowed crop material such as hay, is picked up from the ground and fed in a continuous stream into a fixed or variable diameter chamber. The hay is rolled into a cylindrical package within the chamber, wrapped with twine, net or the like and ejected onto the ground for subsequent handling.

US-A-5,289,672 and US-A-4,956,968 disclose one type prior art round baler of the general nature described above. In this particular type of baler an expandable chamber is defined by a pair of fixed sidewalls, and a plurality of side-by-side belts cooperating with a series of transverse rolls, mounted between a pair of pivotally mounted arms. This arrangement of rolls and arms is commonly referred to as a sledge assembly. The chamber includes an inlet opening in the front through which crop material is fed. Also included is a pair of take-up arms pivotally mounted on the main frame, between which arms a pair of guide rolls are journalled. A biasing force on the take-up arms urges the outer surfaces of the guide rolls against the belts to maintain tension and thereby prevent slack from occurring in the belts during expansion and contraction of the chamber. Density of the bale can be regulated by varying the force on the take-up arms.

Another type of prior art round baler of the same general nature employs a plurality of transverse rolls to define a cylindrical bale forming chamber having a fixed diameter. Examples of this type baler are shown in US-A-4,612,855, US-A-4,604,848 and US-A-4,841,851. It should be noted that the latter patent shows additional embodiments wherein a fixed diameter chamber is defined by means other than rolls, i.e. belts (Figure 7) or transverse slats supported between moving chains (Figure 8). US-A-5,349,806 and US-A-4,610,123 are additional examples of prior art round balers having fixed diameter chambers defined by transverse slats.

The present invention relates to apparatus for storing wrapping material used in a wrapping system for a round baler in which a cylindrical package of crop material is formed in either a fixed chamber or an expanding chamber. For example, the chamber could comprise fixed side walls and an expandable transverse wall defined by a combination of belts and rolls of the general nature described in US-A-5,289,672, cited above. This is one example of the many prior art patents that disclose this type of expandable chamber round baler, commonly referred to as a roll-belt round baler. It is not uncommon in prior art roll-belt round balers to dispense the wrapping material from a storage container carried on the baler main frame, as shown in US-A-4,956,968, referred to above.

Alternatively, the present invention is also adaptable to a round baler having a chamber comprising fixed side walls and transverse forming elements at fixed locations in a configuration of the general nature described in US-A-4,841,851, cited above. Again, the supply of wrapping material is carried on the baler main frame. US-A-5,349,806 and 4,610,123, mentioned above, are further examples of prior art balers having a fixed diameter chamber in which the wrapping material is stored on the main frame.

Unique characteristics of the present invention, described below, contribute to a wrapping system for round balers that conveniently stores wrapping material in a location consistent with the appropriate introduction of wrapping material to the periphery of a cylindrical package of crop material formed in the bale forming chamber, regardless of whether the diameter of the chamber is fixed or variable, and regardless of the nature of the transverse wall, i.e. belts, rolls, slats, or a combination of belts, rolls or slats.

Problems have been encountered in conveniently positioning the container for storing wrapping material used in prior art round balers of the general nature described in the preceding paragraphs. When the container is positioned adjacent the dispensing assembly for the wrapping material, it becomes difficult to conveniently access the dispensing assembly and other operative elements of the baler for service and maintenance.

The baler described in US-A-4,677,807 is provided with a movable housing for wrapping material. The housing can be pivoted forwards and downwards about a horizontal axis for receiving and holding a roll of wrapping material, such as net or plastic film. Opening the housing also provides access to a net/film dispensing assembly. The lower position facilitates the installation of a fresh roll of net, but the housing and the roll hold the operator at a substantial distance from the dispenser, which is now hidden behind the roll. This encumbers the first feeding of the flap of net material into the dispenser, which should take place before the housing is closed. The dispenser applies a number of wraps around the bale during a time interval that the operator controls via a variable hydraulic restrictor. The end of the net roll or a possible net failure is not signaled to the control system and the operator.

The unique features proffered by the structure of the present invention, described below, overcome these problems and contribute to improved performance and operability of round balers having a readily available storage container located adjacent the wrapping assembly. Additionally, these features are consistent with simplification and enhancement of routine serviceability as well as field maintenance, all of which lead to a baler that is significantly more "operator friendly" than prior art balers.

According to the invention, there is provided a round baler for forming crop material into cylindrical bales, said baler having:
a main frame;
a pair of side walls mounted on said main frame and a plurality of conveying elements disposed between said side walls for defining a bale forming chamber;
a pick-up assembly for picking up crop material from a field and feeding it to said bale forming chamber for forming therein a cylindrical package of crop material;
a dispensing assembly for dispensing wrapping material from a supply of wrapping material into said chamber for wrapping the outer surface of said cylindrical package of crop material to form a round bale;
storage means for storing therein said supply of wrapping material; and
means for mounting said storage means on said main frame in an operative position near said dispensing assembly;
said mounting means including means for pivoting said storage means to an inoperative position away from said dispensing assembly for providing access to said storage means and said dispensing assembly,
characterized in that said dispensing assembly includes a metering element for measuring said wrapping material as it is dispensed into said bale forming chamber; and
said baler further comprises means for bringing said supply of wrapping material into engagement with said metering element under conditions where said storage means is moved from said inoperative position to said operative position.

Such storage means, e.g. a pivotable compartment, affords convenient access for replenishing the supply of wrapping material. In its inoperative position it also affords unobstructed access to baler components.

Furthermore, the compartment can pivot between operative and inoperative positions without affecting the operability of the dispensing apparatus for the wrapping material.

The dispensing assembly may also include a drag mechanism, including a frictional element for providing drag as the wrapping material is dispensed into the baling chamber. Advantageously, the baler comprises means for automatically bringing the supply of wrapping material into engagement with the frictional element when the storage means is moved to its operative position. This may be accomplished by connecting the frictional element to a movable lever means to which a resilient means is coupled.

In order to bring the supply of wrapping material into engagement with the metering element, the latter may be connected to a lever means which is coupled to another resilient means.

Means may be provided for adjustment of the vertical position or the angle of the pivot means. Furthermore it is of interest to provide the pivotable compartment or container with space for accommodating an active roll and a spare roll of wrapping material.

An embodiment of the present invention will now be described in further detail, with reference to the following drawings, in which:
Figure 1 is a cross sectional, diagrammatic side elevational view of a round baler in which the present invention is incorporated, the tailgate being in the closed position and the elements of the bale forming chamber being shown in their core starting condition;
Figure 2, generally similar to Figure 1, is a cross sectional, diagrammatic side elevational view of a round baler in which the tailgate is in the closed position and the elements of the bale forming chamber are shown in an intermediate bale forming condition;
Figure 3, also generally similar to Figure 1, is a cross sectional diagrammatic side elevational view of a round baler in which the tailgate is in the closed position, the elements of the bale forming chamber are in the full bale condition, and the wrapping mechanism is in the dispensing position;
Figure 4, also a cross sectional diagrammatic side elevational view of a round baler, shows the tailgate in the open position and the relationship of the elements of the bale forming chamber after a cylindrical package of crop material has been wrapped to form a bale and subsequently discharged rearwardly to a location on the field that does not obstruct the tailgate as it is being returned to the closed position shown in Figure 1;
Figure 5 is a perspective view of a round baler showing the pivotally mounted storage compartment of the present invention in the open position;
Figure 6 is a plan view taken along line 6-6 of Figure 1 showing the storage compartment of the present invention in the closed position;
Figure 7 is a view similar to Figure 6 showing the storage compartment of the present invention in the open position;
Figure 8 is a view taken along line 8-8 in Figure 6; and
Figure 9 is a view taken along line 9-9 in Figure 6.

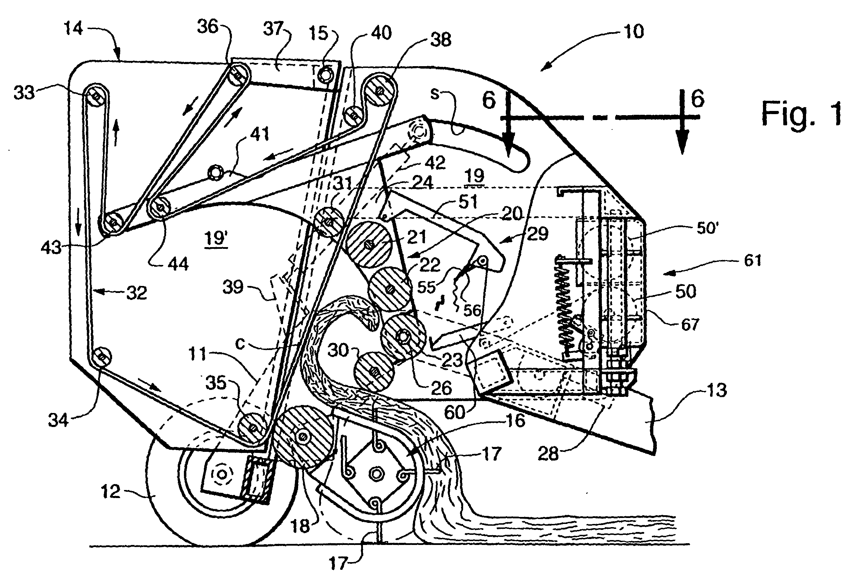

Referring to the drawings for a detailed description of the preferred embodiment of the present invention, Figure 1 shows the cross section of a round baler 10 of the type in which the present invention is readily embodied. Baler 10 has an expandable bale forming chamber defined in part by belts and rolls. This type of expandable chamber is disclosed in various prior art patents, e.g. US-A-4,956,968, mentioned above, which is hereby incorporated by reference. It should be noted that throughout this description the drawings are diagrammatic in nature to best show the elements of the baler in which the preferred embodiment of the invention is embodied. To this end, in many instances only one element in a pair is shown, especially in those cases where identical elements exist, disposed on opposing sides of the baler, e.g. wheels.

Baler 10 has a main frame 11, comprising a plurality of rigid structural elements including a pair of side walls 19 (only one shown). Main frame 11 is supported by a pair of wheels 12 (also only one shown). A forwardly mounted tongue 13, integral with main frame 11, provides for connection to a tractor. Pivotally connected to side walls 19 by a pair of stub shafts 15 (only one shown) is a tailgate 14 which is closed during bale formation. Tailgate 14 includes walls 19' coplanar with side walls 19. A pick-up 16, mounted on main frame 11, has a plurality of tines 17, the tips of which are movable along a predetermined path to lift crop material from the ground and deliver it rearwardly along a generally horizontal path toward a floor roll 18, rotatably mounted on main frame 11.

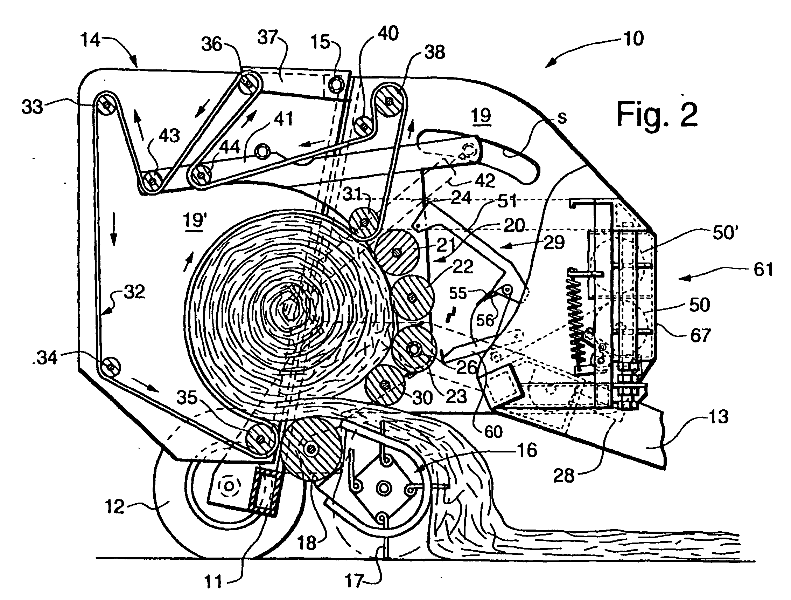

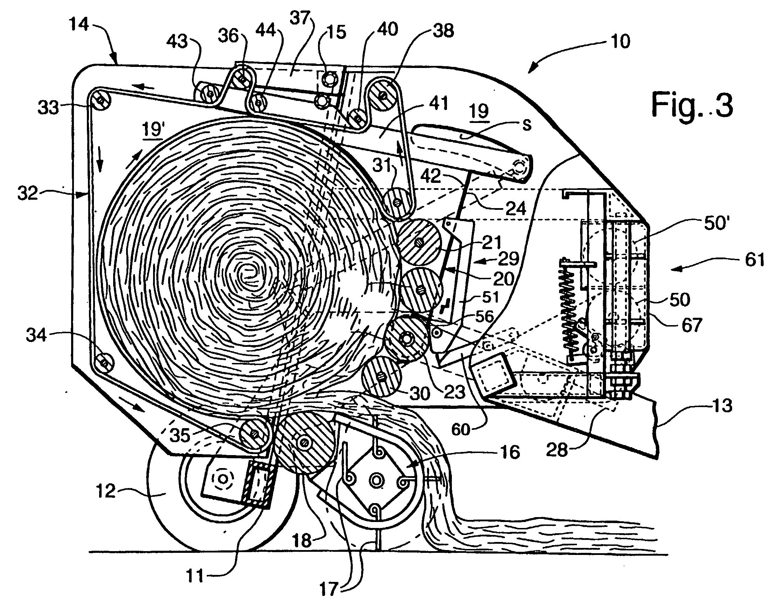

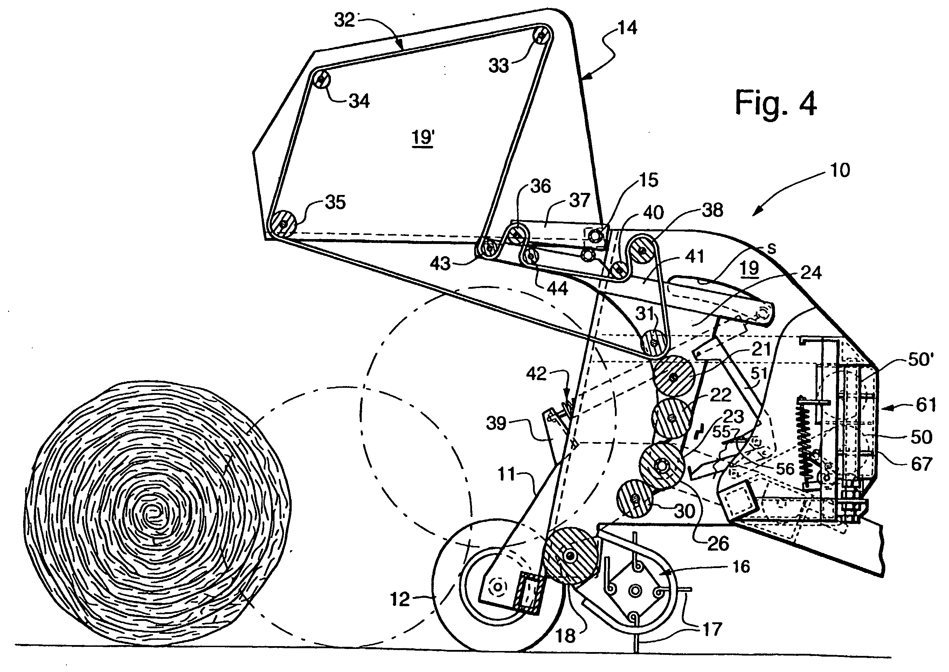

An expandable chamber for forming bales is defined by side walls 19', 19, belts, and a sledge assembly 20, operative between the inwardly facing surfaces of such side walls. Sledge assembly 20 comprises a plurality of transversely extending rolls 21, 22, 23 journalled at their ends in a pair of spaced apart arms 24, one of which is shown. These arms are pivotally mounted on stub shafts 26 for providing movement of sledge assembly 20 from the bale starting position shown in Figure 1 through the partly full position shown in Figure 2 to the full bale position shown in Figure 3, and finally to the bale discharge position shown in Figure 4. Rolls 21, 22, 23 are driven in a counter-clockwise direction by conventional means (for example, intermeshing gears) coupled via an appropriate drive train to a drive shaft 28. A starter roll 30, located adjacent roll 23, is also driven counter-clockwise. Sledge assembly 20 includes a forth roll, a freely rotatable idler roll 31 carried between arms 24, commonly referred to as a follower roll.

Net wrapping apparatus, generally designated by reference numeral 29 in Figures 1-4, is mounted between walls 19 on main frame 11 and sledge assembly 20 forwardly of the bale forming chamber. Net, stored in a compartment, generally designated by reference numeral 61, is dispensed from a supply roll 50 to the chamber via an opening between rolls 22, 23, as shown in Figure 3. A spare roll 50' of net is also stored in compartment 61. Mechanisms similar to wrapping apparatus 29 are shown in US-A-4,956,968 and US-A-5,289,672, mentioned above.

The bale forming chamber of baler 10 is further defined by an apron 32 comprising a plurality of laterally spaced side-by-side belts supported by guide rolls 33, 34, 35, rotatably mounted in tailgate 14, and roll 36, rotatably mounted on stationary arms 37, affixed to main frame 11. Apron 32 is also supported on a drive roll 38, mounted on main frame 11. Apron 32 passes between roll 21 and follower roll 31, and is in engagement only with follower roll 31 and not with roll 21. In addition to its bale forming function, roll 21 serves to strip crop material from the belts, and as such is commonly referred to as a stripper roll.

Suitable coupling means (not shown) connected to drive shaft 28, provide for rotation of drive roll 38. This causes movement of apron 32 along its varying path in the direction indicated by arrows in Figures 1, 2 and 3. An additional guide roll 40 on main frame 11 ensures proper driving engagement between the surfaces of the belts of apron 32 and the surface of drive roll 38.

A pair of take-up arms 41 (only one shown), integral with sledge assembly 20, are affixed to sledge arms 24 for movement between inner, intermediate, outer and bale discharge positions shown in Figures 1, 2, 3 and 4, respectively. Take-up arms 41, which carry additional guide rolls 43, 44 for supporting apron 32, are urged with sledge assembly 20 toward the innermost position (Figure 1), i.e. bale starting position, by tension spring 42, mounted between one of arms 41 and main frame 11 by bracket assembly 39, affixed to main frame 11. Spring 42, mounted outwardly from wall 19, is pivotally secured to arm 41 by journal means extending through access slot s in side wall 19. While one function of spring 42 is to return the sledge and take-up assemblies to the start position after a bale is discharged, another equally as important function is to provide a force on sledge assembly 20 that resists expansive forces on the chamber.

Under conditions where the elements of round baler 10 are disposed as shown in Figure 1, an inner course c of apron 32 extends between guide roll 35 and idler roll 31 to form the rear wall of the core starting chamber while the inwardly facing peripheral surfaces of rolls 21, 22, 23 define in a general manner a rearwardly inclined cooperating front wall. Floor roll 18 defines the bottom of the chamber and cooperates with starter roller 30 to provide a transverse inlet for crop material. During baling, pick-up tines 17 lift crop material from the ground and deliver it through the inlet to floor roll 18, which conveys it rearwardly to apron inner course c (Fig. 1). The apron belts then urge it upwardly and forwardly into engagement with the rolls on sledge 20. In this manner crop material is coiled in a clockwise direction to start a bale core. Continued feeding by pick-up tines 17 urge crop material into the bale forming chamber in a generally spiral fashion. This causes the apron inner course c to expand around a portion of the circumference of the cylindrical package of crop material as its diameter increases (Figure 2). Take-up arms 41 rotate with sledge assembly 20 about the coaxial horizontal axes of stub shafts 26 from their initial positions shown in Figure 1 toward their outer positions shown in Figure 3 to provide for expansion of the inner course of the apron in a manner similar to that of the prior art balers mentioned above, i.e. in effect the outer course of the belts of apron 32 is diminished in length while the inner course c increases a like amount. After a cylindrical package of crop material has been formed in the fashion described, it is wrapped by wrapping apparatus 29, utilizing either twine, plastic or net to encompass the package and form a round bale. Tailgate 14 is then opened and the completed bale is ejected rearwardly (Figure 4) to a position on the field clear of the tailgate, whereupon the paths of the inner and outer courses of apron 32 return to the locations shown in Figure 1.

During bale formation, sledge assembly 20, along with the above described integral take-up assembly, moves between a bale starting position (Figure 1) to a full bale position (Figure 3). This movement of sledge assembly 20 causes idler roll 31 to move along a generally arcuate path while maintaining apron 32 in close proximity to roll 21, thereby allowing roll 21 to strip crop material from the belts and prevent or reduce significantly the loss of crop material through the space between roll 21 and apron 32 during formation of a bale. Sledge assembly 20 is pushed outwardly towards its full bale position during bale formation as the crop material expands against rolls 21, 22, 23 and then subsequently is returned inwardly by apron 32 and spring 42 to the position shown in Figure 1.

To further enhance understanding of the various features of the present invention, it should be noted that even though a roll-belt baler having a unified sledge and take-up assembly is shown, the invention is equally adaptable to other types of round baler configurations having wrapping apparatus operative between a storage compartment and a bale forming chamber, e.g. a variable diameter round baler in which the take-up arms and sledge are not integral, a round baler having a chamber with a fixed diameter, a round baler having a chamber defined only by belts, rolls or chains and slats, etc. Thus, the many advantages realized by the present invention are not limited to a round baler having elements defining a particular fixed or variable chamber configuration.

With the above description and general operation of baler 10 as a background, attention will now be directed to the wrapping system shown. As will become apparent, the wrapping apparatus of baler 10 is merely illustrative of one of the many types to which the features of the present invention are adaptable. For example, although a net wrapping system is shown, utilization of plastic wrap or twine would have no affect on the general aspects of the present invention. With reference back to Figures 1-4, wrapping apparatus 29 more particularly comprises net insertion assembly 51 shown, firstly, in its inactive condition in Figure 1, under conditions where a bale core is being initiated in the chamber, secondly, while still in its inactive condition, it is shown in Figure 2 in the position it takes as the cylindrical package of crop material is being formed, and, lastly, net insertion assembly 51 is shown in the dispensing condition in Figure 3. Figure 4 shows the relationship of the various elements and assemblies of the baler after a cylindrical package of crop material has been wrapped and discharged rearwardly from the bale forming chamber. More particularly, Figures 1-4 show active net roll 50 operatively mounted for dispensing net, via wrapping apparatus 29, along a path defined by a series of guide rolls, to clamping members 55, 56, (descriptively referred to as the duckbill). The net is finally severed by a knife mounted on an arm 60, in a manner known in the art, e.g. severing systems of this type are shown in US-A-5,289,672 and US-A-4,956,968, referred to above. For the purposes of this description, net is shown in Figure 3 as being dispensed into the bale chamber via transverse clamping members 55, 56 of insertion assembly 51. An insertion assembly of this type is shown in US-A-4,956,968, referred to above and hereby incorporated by reference. A twine arm assembly, shown in US-A-5,581,973, is also adaptable for use with net insertion assembly 51. In the latter patent both twine and net wrapping systems are contemplated on the same baler, which is a fixed diameter chamber baler employing rolls in combination with chains and slats to define the chamber. It should be noted that, even though net wrapping is illustrated for the purposes of this description, the insertion of twine or plastic webbing into the bale forming chamber is also contemplated. To this end, reference is again made to US-A-5,581,973. This patent, hereby incorporated by reference, shows apparatus for wrapping with net and/or twine.

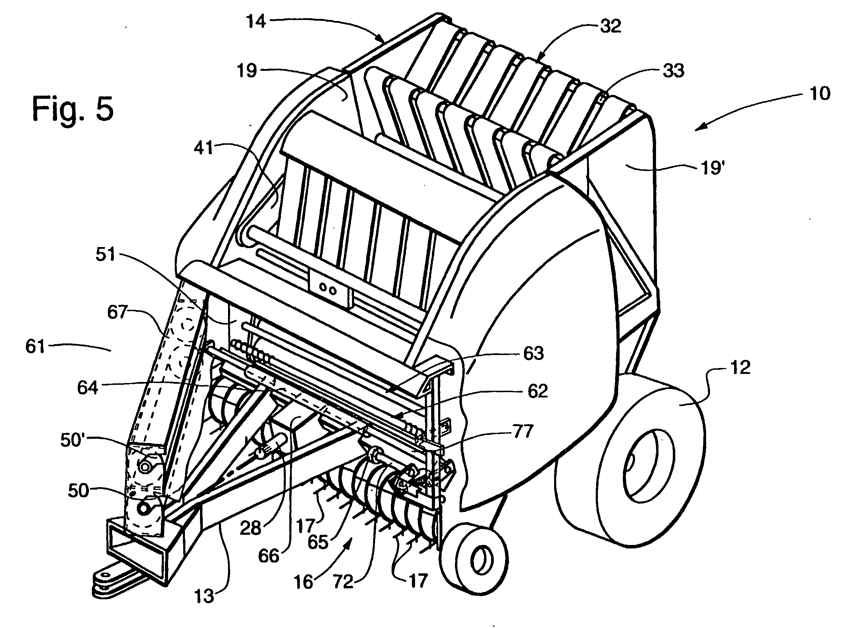

Now turning to the crux of the present invention, Figure 5 shows a perspective view of round baler 10 on the frame of which storage compartment 61 is mounted for storing a supply of wrapping material 50, 50'. More particularly, Figure 5 shows compartment 61 pivoted away from the dispensing assembly for providing convenient access to the storage compartment itself for reloading or changing wrapping medium. For example, spare roll 50' can be loaded into the dispensing location at which roll 50 is shown, when the net on roll 50 becomes depleted. Further, in this open position various internal components, not the least of which are those of the sledge assembly 20 and wrapping apparatus 29, are readily accessible for maintenance and repair. Also, the spreader roll 62 and guide roll 63 about which the net is guided are convenient for threading during initial introduction of the wrapping material, as are other elements used for guiding twine or webbing material depending on the system employed. Net drag sleeve 64 and counter roll 65, shown in Figure 5 and discussed in further detail below, are other examples of operative round baler elements that are accessible as a result of the structure of the present invention. Equally as important from a maintenance standpoint is the convenient accessibility of gearbox 66.

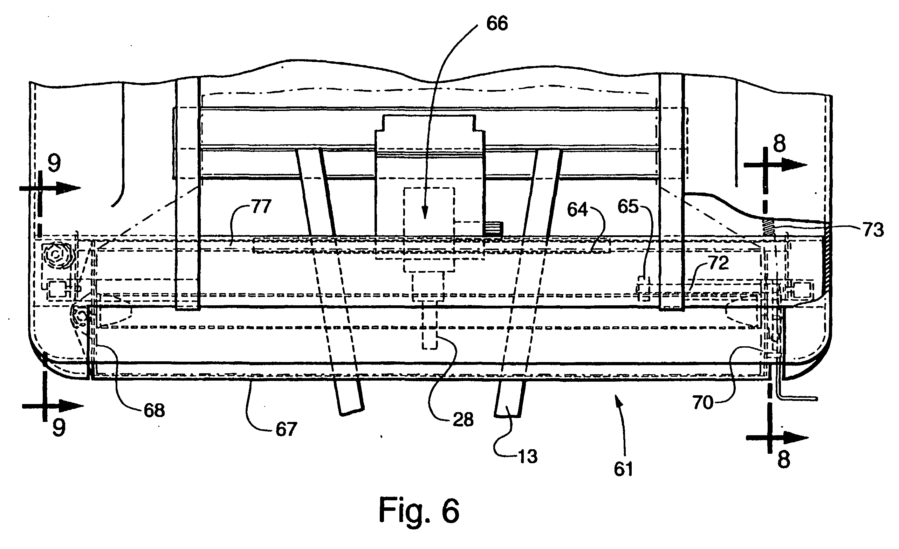

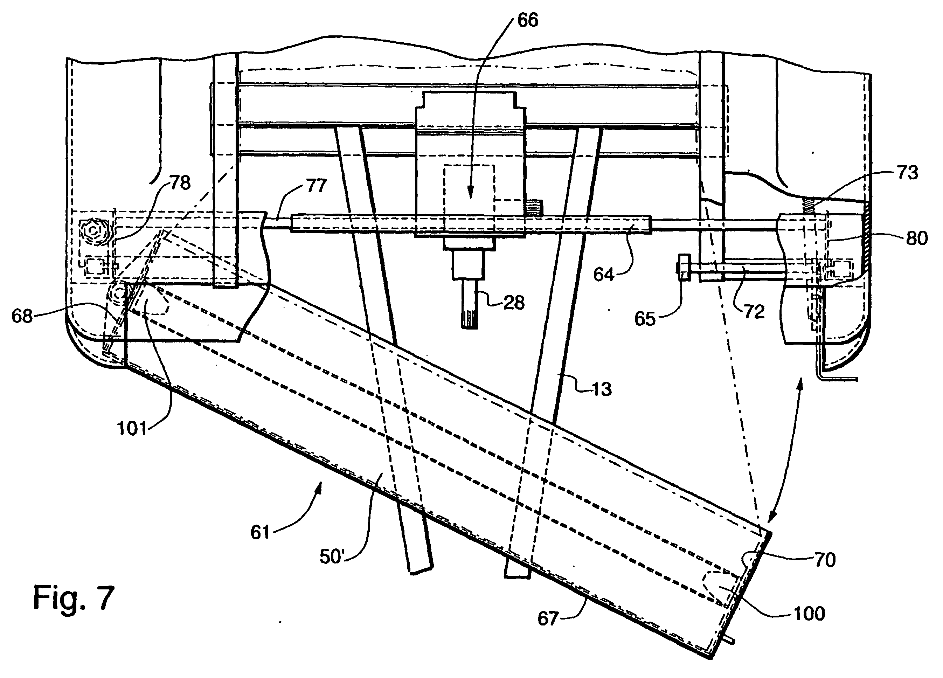

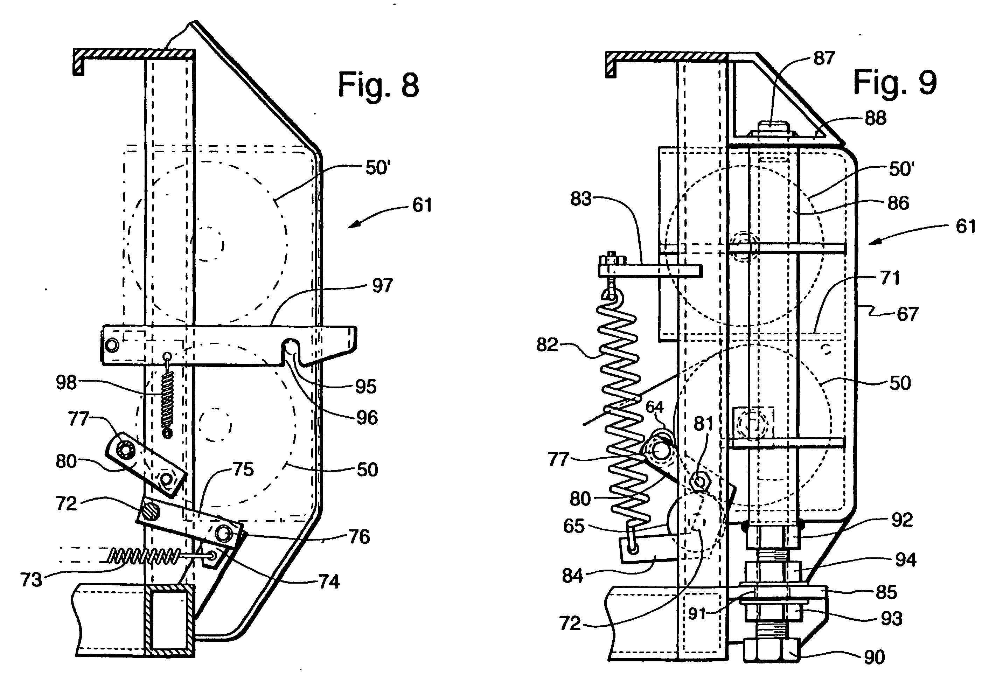

Figures 6 and 7 are top views showing storage compartment 61 in closed and open positions, respectively. The compartment comprises an outer wall 67, generally U-shaped in cross section, and opposing end walls 68, 70. A divider wall 71 (see Figure 9) serves to partition off an upper storage location for spare net roll 50', and a lower storage location from which net is dispensed from roll 50. By utilizing vertical partitions, these areas can readily be partitioned off to accommodate a plurality of twine rolls.

Counter roll 65, keyed on transverse shaft 72, is urged against the outer surface of roll 50 by spring 73 (see Figure 8) to measure the amount of net dispensed, i.e. counter roll 65 rotates in concert with the outer surface of net roll 50 as net is being dispensed. This provides a signal indicative of the amount of net dispensed in a conventional manner. To carry this out, spring 73, secured via tab 74 to pivot arm 75 urges transverse shaft 72 in a clockwise direction toward the periphery of net roll 50 about pivot 76.

In a similar manner, drag sleeve 64 mounted on shaft 77 is also urged against the outer surface of net roll 50 to control the dispensing action of the net in a conventional manner. Shaft 77 is mounted between a pair of arms 78, 80 pivotally mounted to the baler frame. Arm 80, pivoted at pin 81, is urged in a clockwise direction toward net roll 50 by tension spring 82 extending between fixed mounting arm 83 and crank arm 84 integral with to arm 80.

Figure 7 shows counter roll 65 and drag sleeve 64 in their non-operative positions, under conditions where the compartment has been pivoted open about a pivot assembly, extending upwardly from support bracket 85. The pivot assembly has a tubular body portion 86 (Figure 9), a top journal pin 87, welded to tubular frame member 88, and a lower adjustable threaded mounting bolt 90, extending through a slot 91 in support bracket 85, that turns in nut 92 affixed to tubular body portion 86. Vertical adjustment is accomplished by turning the head of bolt 90 to change the position of nut 92 until a desirable adjustment is reached, whereupon locking nuts 93, 94 are locked against bracket 85. Slot 91 extends from side to side a distance sufficient to permit tilt adjustment of compartment 61, i.e. by shifting the position of bolt 90 along slot 91, the slant angle of compartment 61 is varied.

In operation, roll 50 is urged against counter roll 65 and drag sleeve 64 when the compartment is pivoted from its open inoperative position to its closed operative position, regardless of the amount of net remaining on the roll. Under conditions where the compartment is pivoted from its closed latched position to its open position, the net material will stay in its operative threaded position, i.e. the slack will be taken up upon resumption of wrapping. Latching is accomplished by pin 95 received in slot 96 of pivotally mounted latch arm 97, urged downwardly by tension spring 98. A phantom outline (Figures 6 and 7) shows the maximum width of wrapping material accommodated by storage compartment 61, although in practice it has been determined that a net width matching the approximate width of the chamber is preferred. Variation of the position of mounting spindles 100, 101 (Figure 7) is readily effected to match the desired net roll width.

Of the many implicit and explicit advantages of the present invention, one of the most important is the ability to function in a plurality of round baler configurations, i.e. rolls, belts and rolls, or even a chain and slat configuration, as long as the wrapping apparatus of the baler is operative in the vicinity between the storage compartment and an inlet to feed wrapping material to the bale forming chamber. Further, the chamber having such inlet, could be a fixed or variable diameter bale forming chamber, and the wrapping medium could be twine, net or plastic sheets or webbing.

## Claims

1. A round baler (10) for forming crop material into cylindrical bales, said baler having:
a main frame (11);
a pair of side walls (19, 19') mounted on said main frame (11) and a plurality of conveying elements (18, 21-23, 30, 32) disposed between said side walls (19, 19') for defining a bale forming chamber;
a pick-up assembly (16) for picking up crop material from a field and feeding it to said bale forming chamber for forming therein a cylindrical package of crop material;
a dispensing assembly (51) for dispensing wrapping material from a supply (50) of wrapping material into said chamber for wrapping the outer surface of said cylindrical package of crop material to form a round bale;
storage means (61) for storing therein said supply (50) of wrapping material; and
means (85-94) for mounting said storage means (61) on said main frame (11) in an operative position near said dispensing assembly (51);
said mounting means (85-94) including means for pivoting said storage means (61) to an inoperative position away from said dispensing assembly (51) for providing access to said storage means (61) and said dispensing assembly (51),
**characterized in that**:
said dispensing assembly (51) includes a metering element (65) for measuring said wrapping material as it is dispensed into said bale forming chamber; and
said baler further comprises means (72-74) for bringing said supply (50) of wrapping material into engagement with said metering element (65) under conditions where said storage means (61) is moved from said inoperative position to said operative position.

2. A round baler according to claim 1, **characterized in that** said storage means comprises a pivotable compartment (61).

3. A round baler according to claim 1 or 2, **characterized in that** said supply (50) of wrapping material comprises a thin continuous web.

4. A round baler according to claim 3, **characterized in that** said thin continuous web comprises net.

5. A round baler according to claim 3, **characterized in that** said storage means (61) comprises a tubular member from which said continuous web is dispensed.

6. A round baler according to any of the preceding claims, **characterized in that** said means for mounting (85-94) comprise substantially vertically oriented pivot means (85-87).

7. A round baler according to claim 6, when appended to claim 5, **characterized in that** said pivot means (85-87) are arranged in the vicinity of one end of said tubular member.

8. A round baler according to any of the preceding claims, **characterized in that**:
said dispensing assembly (29) includes a frictional element (64) for providing drag as said wrapping material is dispensed into said bale forming chamber; and
said baler further comprises means (77-82) for bringing said supply (50) of wrapping material into engagement with said frictional element (64) under conditions where said storage means (61) is moved from said inoperative position to said operative position.

9. A round baler according to claim 8, **characterized in that** said means (77-82) for bringing said supply (50) of wrapping material into engagement with said frictional element (64) include lever means (84) connected to said frictional element (64), and resilient means (82) coupled to said lever means.

10. A round baler according to any of the preceding claims, **characterized in that** said means (72-74) for bringing said supply (50) of wrapping material into engagement with said metering element (65) include lever means (74, 75) connected to said metering element (65), and resilient means (73) coupled to said lever means.

11. A round baler according to any of the preceding claims, **characterized in that** said mounting means (85-94) include means (90, 92-94) for varying the position of said pivot means to adjust the vertical position of said storage means (61).

12. A round baler according to any of the preceding claims, **characterized in that** said mounting means (85-94) include means (90, 91, 93, 94) for varying the position of said pivot means to adjust the vertical angle thereof.

13. A round baler according to any of the preceding claims, **characterized in that**:
said conveying elements include an apron assembly (32) disposed between said sidewalls (19, 19');
said baler further comprises means (33-36, 38) for supporting said apron assembly on said main frame (11) and means (38, 40) for moving said apron assembly (32) along a path (c) contiguous with a portion of the periphery of said bale forming chamber.

14. A round baler according to any of the preceding claims, **characterized in that**:
said conveying elements include at least two transverse rolls (21-23) mounted in spaced relationship along an arcuate path; and
and said baler further comprises means for rotating said transverse rolls (21-23) such that the outer surfaces thereof move in the same direction of travel.

15. A round baler according to any of the preceding claims, **characterized in that** said storage means (61) comprises means for accommodating a supply roll (50) and a spare supply roll (50') of wrapping material.

## Patentansprüche

1. Rundballenpresse (10) zur Formung von Erntematerial zu zylindrischen Ballen, wobei die Ballenpresse Folgendes aufweist:
einen Hauptrahmen (11;
zwei Seitenwände (19, 19'), die auf dem Hauptrahmen (11) befestigt sind, und eine Anzahl von Förderelementen (18, 21-23, 30, 32), die zwischen den Seitenwänden (19, 19') angeordnet sind, um eine Ballenformungskammer zu begrenzen;
eine Aufnahmebaugruppe (16) zum Aufnehmen von Erntematerial von einem Feld und zu dessen Zuführung zu der Ballenformungskammer, um darin einen zylindrischen Packen aus Emtematerial zu formen;
eine Abgabebaugruppe (51) zur Abgabe von Umwicklungsmaterial von einem Vorrat (50) von Umwicklungsmaterial in die Kammer zum Umwickeln der Außenoberfläche des zylindrischen Packens aus Erntematerial zur Bildung eines Rundballens;
Speichereinrichtungen (61) zum Speichern des Vorrats (70) an Umwicklungsmaterial darin; und
Einrichtungen (85-94) zur Befestigung der Speichereinrichtungen (61) auf dem Hauptrahmen (11) in einer Betriebsstellung in der Nähe der Abgabebaugruppe (51);
wobei die Befestigungseinrichtungen (85-94) Einrichtungen zum Verschwenken der Speichereinrichtungen (61) auf eine Stellung außer Betrieb von der Abgabebaugruppe (51) fort zur Bereitstellung eines Zugangs an die Speichereinrichtungen (61) und die Abgabebaugruppe (51) einschließen,
**dadurch gekennzeichnet, dass**:
die Abgabebaugruppe (51) ein Messelement (65) zum Messen des Umwicklungsmaterials einschließt, während dieses in die Ballenformungskammer abgegeben wird; und
wobei die Ballenpresse weiterhin Einrichtungen einschließt, die den Vorrat (50) an Umwicklungsmaterial in Eingriff mit dem Messelement (65) unter Bedingungen bringt, unter denen die Speichereinrichtung (61) von der außer Betrieb gesetzten Stellung in die Betriebsstellung bewegt wird.

2. Rundballenpresse nach Anspruch 1, **dadurch gekennzeichnet, dass** die Speichereinrichtungen ein schwenkbares Abteil (61) umfassen.

3. Rundballenpresse nach Anspruch 1 oder 2, **dadurch gekennzeichnet, dass** der Vorrat (50) an Umwicklungsmaterial eine dünne kontinuierliche Bahn umfasst.

4. Rundballenpresse nach Anspruch 3, **dadurch gekennzeichnet, dass** die dünne kontinuierliche Bahn Netzmaterial umfasst.

5. Rundballenpresse nach Anspruch 3, **dadurch gekennzeichnet, dass** die Speichereinrichtung (61) ein rohrförmiges Bauteil umfasst, von dem aus die kontinuierliche Bahn abgegeben wird.

6. Rundballenpresse nach einem der vorhergehenden Ansprüche, **dadurch gekennzeichnet, dass** die Befestigungseinrichtungen (85-94) im Wesentlichen vertikal ausgerichtete Schwenkeinrichtungen (85-87) umfassen.

7. Rundballenpresse nach Anspruch 6 unter Rückbeziehung auf Anspruch 5, **dadurch gekennzeichnet, dass** die Schwenkeinrichtungen (85-87) in der Nähe eines Endes des rohrförmigen Bauteils angeordnet sind.

8. Rundballenpresse nach einem der vorhergehenden Ansprüche, **dadurch gekennzeichnet, dass**:
die Abgabebaugruppe (29) ein Reibelement (64) zur Lieferung einer Bremsung einschließt, während das Umwicklungsmaterial in die Ballenformungskammer abgegeben wird; und
die Ballenpresse weiterhin Einrichtungen (77-82) zum Bringen des Vorrates (50) an Umwicklungsmaterial in Eingriff mit dem Reibelement (64) unter Bedingungen umfasst, unter denen die Speichereinrichtung (61) von der außer Betrieb gesetzten Stellung in die Betriebsstellung bewegt wird.

9. Rundballenpresse nach Anspruch 8, **dadurch gekennzeichnet, dass** die Einrichtungen (77-82) zum Bringen des Vorrats (50) von Umwicklungsmaterial in Eingriff mit dem Reibelement (64) Hebeleinrichtungen (84), die mit dem Reibelement (64) verbunden sind, und elastische Einrichtungen (82) einschließen, die mit den Hebeleinrichtungen gekoppelt sind.

10. Rundballenpresse nach einem der vorhergehenden Ansprüche, **dadurch gekennzeichnet, dass** die Einrichtungen (72-74) zum Bringen des Vorrats (50) von Umwicklungsmaterial in Eingriff mit dem Messelement (65) Hebeleinrichtungen (74, 75), die mit dem Messelement (65) verbunden sind, und elastische Einrichtungen (73) einschließen, die mit den Hebeleinrichtungen gekoppelt sind.

11. Rundballenpresse nach einem der vorhergehenden Ansprüche, **dadurch gekennzeichnet, dass** die Befestigungseinrichtungen (85-94) Einrichtungen (90, 92-94) zur Änderung der Position der Schwenkeinrichtungen zur Einstellung der vertikalen Position der Speichereinrichtungen (61) einschließen.

12. Rundballenpresse nach einem der vorhergehenden Ansprüche, **dadurch gekennzeichnet, dass** die Befestigungseinrichtungen (85-94) Einrichtungen (90, 91, 93, 94) zum Ändern der Position der Schwenkeinrichtungen zur Einstellung des vertikalen Winkels hiervon einschließen.

13. Rundballenpresse nach einem der vorhergehenden Ansprüche, **dadurch gekennzeichnet, dass**:
die Förderelemente eine Umschlingungsbaugruppe (32) einschließen, die zwischen den Seitenwänden (19, 19') angeordnet ist;
die Ballenpresse weiterhin Einrichtungen (33-36, 38) zur Halterung der Umschlingungsbaugruppe auf dem Hauptrahmen (11) und Einrichtungen (38, 40) zum Bewegen der Umschlingungsbaugruppe (32) entlang eines Pfades (c) umfasst, die an einen Teil des Umfanges der Ballenformungskammer angrenzt.

14. Rundballenpresse nach einem der vorhergehenden Ansprüche, **dadurch gekennzeichnet, dass**:
die Förderelemente zumindest zwei sich in Querrichtung erstreckende Walzen (21-23) einschließen, die in mit Abstand voneinander angeordneter Beziehung entlang eines bogenförmigen Pfades befestigt sind; und
die Ballenpresse weiterhin Einrichtungen umfasst, die die sich in Querrichtung erstreckenden Walzen (21-23) derart in Drehung versetzen, dass sich deren Außenoberflächen in der gleichen Bewegungsrichtung bewegen.

15. Rundballenpresse nach einem der vorhergehenden Ansprüche, **dadurch gekennzeichnet, dass** die Speichereinrichtungen (61) Einrichtungen zur Unterbringung einer Vorratsrolle (50) und einer Reserve-Vorratsrolle (50') von Umwicklungsmaterial umfassen.

## Revendications

1. Ramasseuse-presse (10) à balles rondes, destinée à former des balles de matériau de récolte pour en faire des balles cylindriques, comprenant :
un châssis principal (11);
une paire de parois latérales (19, 19') montées sur ledit châssis principal (11) et une pluralité d'éléments de transport (18, 21-23, 30, 32) disposés entre lesdites parois latérales (19, 19') pour la définition d'une chambre de bottelage;
un dispositif ramasseur (16) pour le ramassage du matériau de récolte à partir du champ et l'alimentation à ladite chambre de bottelage pour la formation à l'intérieur de celle-ci d'un paquet cylindrique de matériau de récolte;
un ensemble de distribution (51) pour la distribution de la matière d'emballage à partir d'une alimentation (50) de matière d'emballage dans ladite chambre pour l'emballage de la surface extérieure dudit emballage cylindrique de matériau de récolte de manière à former une balle ronde;
un moyen de stockage (61) pour le stockage de ladite alimentation (50) de matière d'emballage; et
un moyen (85-94) pour le montage dudit moyen de stockage (61) sur ledit châssis principal (11) dans une position opérationnelle à proximité dudit ensemble de distribution (51);
ledit moyen de montage (85-94) comportant un moyen pour le pivotement dudit moyen de stockage (61) dans une position non opérationnelle à distance dudit ensemble de distribution (51) de manière à pouvoir accéder audit moyen de stockage (61) et audit ensemble de distribution (51),
**caractérisé en ce que**:
l'ensemble de distribution (51) comporte un élément de mesurage (65) pour la mesure de ladite matière d'emballage au fur et à mesure de sa distribution dans ladite chambre de bottelage; et
ladite botteleuse comporte en outre un moyen (72-74) pour engager ladite alimentation (50) de la matière d'emballage avec ledit élément de mesurage (65) dans des conditions où ledit moyen de stockage (61) est déplacé de ladite position non opérationnelle dans ladite position opérationnelle.

2. Ramasseuse-presse à balles rondes selon la revendication 1, **caractérisée en ce que** ledit moyen de stockage comprend un compartiment pivotable (61).

3. Ramasseuse-presse à balles rondes selon la revendication 1 ou 2, **caractérisée en ce que** ladite alimentation (50) de la matière d'emballage comprend une bande continue et fine.

4. Ramasseuse-presse à balles rondes selon la revendication 3, **caractérisée en ce que** ladite bande continue et fine comprend un filet.

5. Ramasseuse-presse à balles rondes selon la revendication 3, **caractérisée en ce que** ledit moyen de stockage (61) comporte un élément tubulaire à partir duquel ladite bande continue est distribuée.

6. Ramasseuse-presse à balles rondes selon l'une quelconque des revendications qui précédent, **caractérisée en ce que** lesdits moyens de montage (85, 94) comprennent des moyens à pivot (85-87) à orientation verticale.

7. Ramasseuse-presse à balles rondes selon la revendication 6, lorsque celle-ci est associée à la revendication 5, **caractérisée en ce que** lesdits moyens à pivot (85-87) sont disposés au voisinage d'une extrémité dudit élément tubulaire.

8. Ramasseuse-presse à balles rondes selon l'une quelconque des revendications qui précédent, **caractérisée en ce que** :
ledit assemblage de distribution (29) comporte un élément de friction (64) pour fournir une traction lorsque ladite matière d'emballage est distribuée dans ladite chambre de ballottage et que
ladite ballotteuse comporte également des moyens (77-82) pour engager ladite alimentation (50) de matière d'emballage avec ledit élément de friction (64) lorsque ledit moyen de stockage (61) est déplacé de ladite position non opérationnelle dans ladite position opérationnelle.

9. Ramasseuse-presse à balles rondes selon la revendication 8, **caractérisée en ce que** lesdits moyens (77-82) pour engager ladite alimentation (50) de matière d'emballage avec ledit élément de friction (64) comprennent des moyens à levier (84) reliés audit élément de friction (64) ainsi que des moyens résilients (82) couplés à d'autres moyens à levier.

10. Ramasseuse-presse à balles rondes selon l'une quelconque des revendications précédentes, **caractérisée en ce que** lesdits moyens (72-74) pour engager ladite alimentation (50) de matière d'emballage avec ledit élément de mesurage (65) comportent des moyens à levier (74-75) connectés audit élément de mesurage (65) et des moyens résilients (73) couplés auxdits levier.

11. Ramasseuse-presse à balles rondes selon l'une quelconque des revendications précédentes, **caractérisée en ce que** lesdits moyens de montage (85-94) comprennent des moyens (90-92-94) pour faire varier la position desdits moyens à pivot de manière à ajuster la position verticale desdits moyens de stockage (61).

12. Ramasseuse-presse à balles rondes selon l'une quelconque des revendications précédentes, **caractérisée en ce que** lesdits moyens de montage (85-94) comprennent des moyens (90,91, 93, 94) pour faire varier la position dudit pivot de manière à ajuster leur angle vertical.

13. Ramasseuse-presse à balles rondes selon l'une quelconque des revendications précédentes, **caractérisée en ce que** :
lesdits éléments de transport comprennent un assemblage à tablier (32) disposé entre lesdites parois latérales (19, 19);
ladite ramasseuse-presse comporte des moyens (33-36, 38) pour soutenir ledit assemblage en tablier sur ledit châssis (11) et des moyens (38, 40) pour déplacer ledit ensemble à tablier (32) sur un itinéraire (c) contigu à une partie de la périphérie de ladite chambre de ballottage.

14. Ramasseuse-presse à balles rondes selon l'une quelconque des revendications précédentes, **caractérisée en ce que** :
lesdits éléments de transport comprennent au moins deux rouleaux transversaux (21-23) montés dans une relation espacée selon une trajectoire incurvée; et
ladite ramasseuse-presse comporte également des moyens pour la rotation desdits rouleaux transversaux (21-23) de manière telle que leurs surfaces extérieures se déplacent dans la même direction de transport.

15. Ramasseuse-presse à balles rondes selon l'une quelconque des revendications précédentes **caractérisée en ce que** ledit moyen de stockage (61) comprend des moyens pour accueillir un rouleau d'alimentation (50) et un rouleau d'alimentation de réserve (50') de matière d'emballage.
